# FASCICULE DE BREVET EUROPEEN

(11) **EP 2 746 994 B1**
(45) Date de publication et mention de la délivrance du brevet: **02.11.2016**
(21) Numéro de dépôt: 13197831.4
(22) Date de dépôt: 17.12.2013
(51) Int. Cl.: G06K 19/06, B42D 25/36, B42D 25/455, B42D 25/46, B42D 25/328, B42D 25/351, B42D 25/41

(54) **Dispositif de sécurité**
Sicherheitsvorrichtung
Safety device

(30) Priorité: 20.12.2012 FR 1262490
(43) Date de publication de la demande: 25.06.2014
(73) Titulaire: OBERTHUR TECHNOLOGIES, 92700 Colombes (FR)
(72) Inventeur: Rémy, Alban, 92700 Colombes (FR)
(74) Mandataire: Santarelli

(56) Documents cités:
- DE-A1-102008 012 436
- GB-A- 2 240 948
- US-A1- 2004 007 625
- US-A1- 2004 265 552

## Description

La présente invention concerne un dispositif de sécurité du type employé pour sécuriser un document identitaire, tel une carte d'identité ou un passeport.

Il est connu dans le domaine des dispositifs de sécurité de réaliser un support sensiblement mince et plan pour un dispositif de sécurité, par laminage conjoint de différentes couches de matériaux plastiques. Sous certaines conditions, il est possible de réaliser dans un tel support des zones aptes à être gravées au moyen d'un faisceau laser, postérieurement au laminage. Cette gravure permet d'individualiser ou de personnaliser le dispositif de sécurité, en venant écrire un texte ou dessiner un dessin. Il est ainsi possible d'ajouter, par exemple, le nom ou la photo du porteur d'un passeport. Avantageusement une telle gravure produit un motif, texte ou dessin, qui prend place au sein de couches internes au support, rendant ainsi délicat pour un contrefacteur ou un faussaire, une modification dudit motif.

Cependant, les zones aptes à être gravées ont jusqu'ici été réalisées dans une unique couche plane parallèle au plan du support. Ceci peut permettre à des faussaires d'atteindre la zone apte à être gravée et le motif gravé qu'elle contient par ponçage plan du support sur toute la partie de son épaisseur comprise entre une quelconque des faces du support et le plan contenant le motif gravé. Le faussaire parvient ainsi à accéder au motif gravé et peut le modifier, l'effacer et/ou le remplacer.

Il est connu de disposer, de part et d'autre d'une couche réfléchissante, deux couches pouvant être marquées par laser dans des conditions différentes (US - 2004/0265552), ou de disposer des informations superposées dans des couches différentes (DE - 10 2008 012 436 ou US - 2004/0007625) ou de réaliser des attaques à des profondeurs différentes (GB - 2 240 948).

Il est encore connu d'ajouter lors du laminage, un film de sécurité, tel un dispositif optique variable. Un tel film de sécurité peut ainsi être inséré entre deux couches, avant l'opération de laminage. La présence d'un tel film de sécurité peut être vérifiée visuellement dans le dispositif de sécurité. Aussi, la difficulté à contrefaire un tel film de sécurité protège un dispositif de sécurité et le motif gravé contre un ponçage qui ne manquerait pas de détruire le film de sécurité. Cependant cette protection ne vaut que pour le côté où se trouve le film de sécurité et un ponçage reste possible depuis l'autre côté du support.

Aussi convient-il d'améliorer la protection d'un motif gravé dans un tel dispositif de sécurité.

Pour cela la présente invention propose de répartir des zones aptes à être gravées selon différentes épaisseurs. Il est encore possible de compléter cette protection en intercalant au moins un film de sécurité entre lesdites zones, afin de compliquer encore l'accès par ponçage à un motif gravé.

L'invention a pour objet un dispositif de sécurité présentant une extension principale sensiblement selon un plan et comprenant au moins deux zones aptes à être gravées par laser, chacune desdites au moins deux zones comprenant une partie transparente et une partie opaque et les interfaces entre la partie transparente et la partie opaque d'au moins deux zones étant disposées à au moins deux profondeurs différentes, lesdites au moins deux zones étant ainsi disposées à au moins deux profondeurs différentes d'une manière telle que, selon une direction perpendiculaire au plan du dispositif, aucune zone ne recouvre ni n'est recouverte par même une partie d'une autre zone.

Selon une autre caractéristique de l'invention, le dispositif comprend encore au moins un film de sécurité intercalé entre deux desdites au moins deux zones.

Selon une autre caractéristique de l'invention, le dispositif comprend un motif gravé réparti entre les au moins deux zones.

Selon une autre caractéristique de l'invention, lesdites au moins deux zones présentent, dans le plan du dispositif, des extensions disjointes.

Selon une autre caractéristique de l'invention, au moins deux zones présentent, dans le plan du dispositif, des extensions contiguës.

Selon une autre caractéristique de l'invention, ledit au moins un film de sécurité est disposé à une profondeur intermédiaire entre lesdites deux profondeurs.

Selon une autre caractéristique de l'invention, le film de sécurité présente une extension selon le plan du dispositif telle qu'il recouvre au moins une partie d'une zone et/ou est recouvert par au moins une partie d'une autre zone.

Selon une autre caractéristique de l'invention, le film de sécurité est transparent.

Selon une autre caractéristique de l'invention, le film de sécurité comprend un dispositif optique variable.

Selon une autre caractéristique de l'invention, le dispositif optique variable comprend un hologramme transparent.

Selon une autre caractéristique de l'invention, les zones et parties sont conformées en couches planes parallèles au plan du dispositif.

Selon une autre caractéristique de l'invention, le film de sécurité est conformé en une couche plane parallèle au plan du dispositif.

Selon une autre caractéristique de l'invention, le dispositif comprend un motif gravé, au moins une partie dudit motif étant gravé dans une zone disposée d'un côté d'un film de sécurité et au moins une partie dudit motif étant gravé dans une autre zone disposée de l'autre côté du film de sécurité.

L'invention concerne encore un document identitaire comprenant au moins un tel dispositif de sécurité.

L'invention concerne encore un procédé de fabrication d'un dispositif de sécurité comprenant les étapes suivantes : réalisation d'une couche mixte : opaque sur au moins une partie de son extension et transparente sur au moins une autre partie de son extension, empilage dans l'ordre suivant de : une couche transparente, au moins un film de sécurité, ladite couche mixte, et une couche opaque, ledit film de sécurité se superposant au moins partiellement avec ladite partie transparente de la couche mixte, et laminage dudit empilage.

Selon une autre caractéristique de l'invention, la réalisation de la couche mixte comprend les étapes de : découpe débouchante dans une couche opaque de ladite au moins une partie devant être transparente, empilage de ladite couche découpée et d'une couche transparente, et laminage dudit empilage.

D'autres caractéristiques, détails et avantages de l'invention ressortiront plus clairement de la description détaillée donnée ci-après à titre indicatif en relation avec des dessins sur lesquels :
- la figure 1 présente une vue d'ensemble, précisant les directions utilisées, d'un dispositif de sécurité,
- la figure 2 est une vue de dessus d'un dispositif de sécurité,
- la figure 3 est une vue de profil du dispositif de sécurité de la figure 2,
- la figure 4 est une vue de profil d'un dispositif de sécurité comprenant un film de sécurité,
- la figure 5 illustre le principe de la gravure par laser,
- la figure 6 est une vue de profil d'un dispositif de sécurité comprenant un film de sécurité selon un autre mode de réalisation,
- la figure 7 est une vue de dessus du dispositif de sécurité de la figure 4 ou de la figure 6,
- la figure 8 illustre différentes configurations de motif gravé,
- la figure 9 illustre un procédé de fabrication d'un dispositif de sécurité au moyen d'une couche mixte,
- les figures 10 et 11 illustrent deux étapes de réalisation d'une couche mixte.

L'invention concerne un dispositif de sécurité 1. Un tel dispositif de sécurité 1 se présente sous une forme présentant une extension principale selon un plan 3 et au contraire selon la direction perpendiculaire 4 au plan une extension/épaisseur relativement limitée. Ceci permet d'apposer ou d'intégrer un tel dispositif de sécurité 1 sur un document afin de l'authentifier et/ou d'authentifier sa provenance. Un tel document peut être une feuille ou un livret en papier, ou encore une carte plastique. Le document peut être un document identitaire tel un permis de conduire, une carte d'identité, un passeport ou encore tout autre document de ce type.

La principale qualité d'un dispositif de sécurité 1 doit être une difficulté à le reproduire ou à le modifier. Ainsi la présence d'un tel dispositif de sécurité 1 authentifie son émetteur, réputé seul apte à produire ledit dispositif de sécurité 1. De plus si un tel dispositif de sécurité 1 ne peut être ni reproduit ni modifié, un motif intégré au dispositif de sécurité 1 est réputé être celui d'origine initialement placé par l'autorité d'émission.

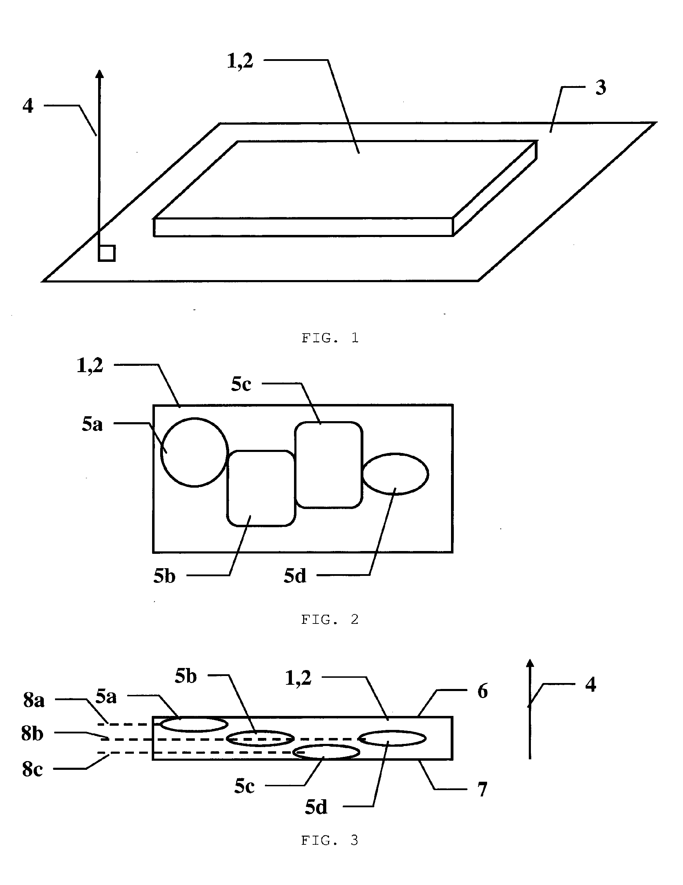

La figure 1 illustre un dispositif de sécurité 1 selon l'invention et précise les directions 3, 4, utilisées. Le dispositif de sécurité 1 s'identifie à son support 2. Il présente une forme sensiblement plane et s'étend selon un plan 3. Il est mince en ce que ses dimensions dans le plan 3 sont nettement plus grandes que son épaisseur. De manière illustrative ses dimensions dans le plan 3 sont de l'ordre du centimètre, tandis que son épaisseur est de l'ordre du millimètre. La direction 4 est perpendiculaire au plan 3.

La figure 2 présente le même dispositif de sécurité 1 en vue de dessus. Le plan de la figure coïncide ici avec le plan 3.

La figure 3 présente le même dispositif de sécurité 1 en vue de profil, selon l'épaisseur. La vue est ici coupée selon une direction 4 perpendiculaire au plan 3. Les dimensions selon l'épaisseur ont été volontairement augmentées afin d'augmenter la lisibilité.

Un moyen privilégié pour réaliser un dispositif de sécurité 1, utilisé par l'invention, est la gravure au moyen d'un faisceau laser 13. Le principe, connu, d'un tel moyen, est de disposer dans le support 2 des zones 5a-d aptes à être gravées. Une telle zone 5a-d se caractérise par une interface entre un matériau transparent 11 et un matériau, pouvant être le même, opaque 12.

On entend par transparent dans le présent document la caractéristique d'un matériau apte à laisser passer un faisceau laser afin de venir graver. Une telle caractéristique de transparence permet aussi ensuite à un tel motif gravé d'être vu par un observateur.

On entend par opaque dans le présent document la caractéristique d'un matériau apte à stopper un faisceau laser.

Le matériau opaque 12 est avantageusement blanc afin de contraster le motif gravé. Le matériau opaque 12 stoppe le faisceau laser 13 qui brûle localement le matériau transparent 11 à proximité, réalisant un point 14, typiquement noir. La précision du laser permet ainsi d'écrire/dessiner un motif dans une telle zone 5a-d. Cette zone 5a-d peut être interne à un support 2, sous réserve que seuls des matériaux transparents ne séparent ladite zone 5a-d de l'extérieur 6 du support 2. Cette dernière condition est nécessaire d'une part pour que le laser 13 puisse atteindre ladite zone 5a-d et y graver un motif et d'autre part pour que le motif ainsi gravé soit ensuite visible depuis l'extérieur 6.

Il est défini un côté extérieur 6, par exemple ici le côté supérieur dans la figure 3 et un côté intérieur 7, par exemple ici le côté inférieur dans la figure 3. Les côtés intérieur 7 et extérieur 6 peuvent être définis individuellement relativement à chaque zone 5a-d. Cependant avantageusement, un même côté intérieur 7, respectivement un même côté extérieur 6, peut être défini pour toutes les zones 5a-d du dispositif de sécurité 1. Le côté intérieur 7 aveugle est alors typiquement disposé du côté du document à protéger, tandis que le côté extérieur 6 est disposé de manière à être visible.

L'attaque crainte, et contre laquelle l'invention tente de protéger, est un accès à une zone 5a-d par ponçage du dispositif de sécurité 1, sensiblement parallèlement au plan 3, depuis l'un des côtés extérieur 6 ou intérieur 7.

Un dispositif de sécurité selon l'art antérieur comprend typiquement une unique zone apte à être gravée, sous la forme d'une unique couche, parallèle au plan du dispositif de sécurité. Aussi un ponçage jusqu'à la profondeur de cette couche unique permet un accès au motif gravé et par suite sa modification ou sa destruction et son remplacement.

Selon une caractéristique importante de l'invention, le dispositif de sécurité 1 comprend au contraire au moins deux zones 5a-d aptes à être gravées par laser, et ces zones 5a-d sont disposées à au moins deux profondeurs différentes. La profondeur est ici mesurée selon une direction 4 sensiblement perpendiculaire au plan 3 du dispositif.

Ainsi le dispositif de sécurité 1 illustratif présenté aux figures 1-3 comprend 4 zones 5a-d. Une première zone 5a est disposée à une première profondeur 8a. Une deuxième zone 5b est disposée à une deuxième profondeur 8b. Une troisième zone 5c est disposée à une troisième profondeur 8c. Une quatrième zone 5d est encore disposée à la deuxième profondeur 8b.

Une telle disposition rend plus difficile l'accès à un motif gravé dans les différentes zones 5a-d par ponçage. Ainsi un ponçage plan depuis le côté 7, à la profondeur 8c, permet d'atteindre la zone 5c. Cependant un accès à la zone 5a nécessite un ponçage jusqu'à l'épaisseur 8a, qui détruit ainsi la zone 5c. Il n'est ainsi pas possible d'accéder à toutes les zones simultanément, par exemple pour modifier le motif qu'elles contiennent.

Une deuxième contremesure, qui vient avantageusement renforcer encore la précédente, en s'y combinant, consiste à disposer au moins un film de sécurité 9.

Il est connu dans l'art antérieur de disposer un film de sécurité dans un dispositif de sécurité, d'un côté de l'unique zone apte à être gravée. Ceci interdit un ponçage depuis le dit côté. Cependant il est toujours possible à un faussaire d'accéder au motif gravé par un ponçage depuis l'autre côté.

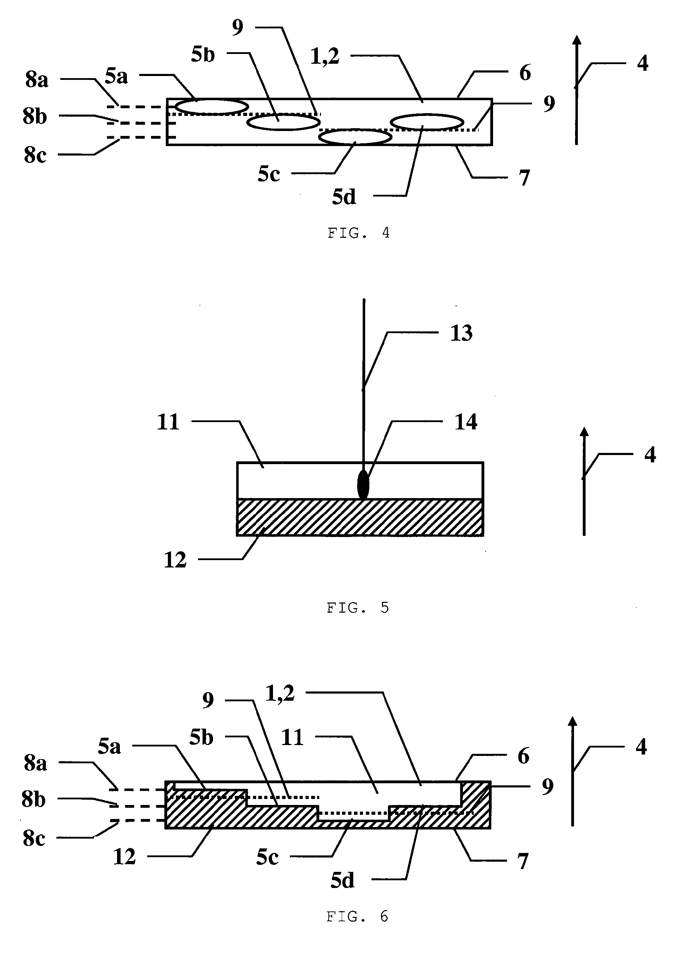

Aussi, selon l'invention, cette deuxième contremesure, intercale ou entrelace le film de sécurité 9 entre les différentes zones 5a-d. Selon une direction 4 perpendiculaire au plan 3 du dispositif de sécurité 1, certaines zones 5a-d se retrouvent au-dessus dudit film de sécurité 9, tandis que d'autres zones se retrouvent au-dessous dudit film de sécurité 9. Tel qu'illustré à la figure 4, un film de sécurité 9 est disposé au-dessous de la zone 5a, mais au-dessus des zones 5b et 5c et sous la zone 5d.

Ainsi, il n'est pas possible d'atteindre toutes les zones 5a-d, par ponçage plan, que ce soit depuis un côté 6 ou depuis l'autre côté 7, sans détruire au moins une partie du film de sécurité 9.

Selon un mode de réalisation de l'invention, le dispositif de sécurité 1 comprend encore un motif gravé réparti entre au moins deux zones 5a-d. Ainsi avantageusement, ce motif lie encore davantage lesdites au moins deux zones 5a-d entre elles et rend obligatoire pour un faussaire une modification conjointes de ces au moins deux zones 5a-d. Aussi si ce motif comprend une image ou un dessin se poursuivant d'une zone 5a-d à l'autre en cohérence, il est aisé de contrôler qu'une ou plusieurs des zones 5a-d ont été modifiées.

Selon une autre caractéristique de l'invention, plus particulièrement visible en vue de dessus et illustrée à la figure 2, les extensions des zones 5a-d dans le plan 3 du dispositif 1 sont telles qu'elles ne se recouvrent pas. Ainsi tel qu'illustré à la figure 2, les extensions des zones 5a-d sont disjointes.

Ceci est avantageux pour le procédé de réalisation, mais est de plus nécessaire pour qu'une zone 5a-d puisse être gravée. En effet pour qu'une zone 5a-d puisse être gravée, il convient que rien ne fasse obstacle au passage du faisceau laser 13 entre le côté extérieur 6 et ladite zone 5a-d. Ainsi tout le volume disposé entre une zone 5a-d et la surface du côté extérieur 6 doit être en matière transparente. Ceci n'est pas le cas d'une zone 5a-d qui comporte une partie opaque pour pouvoir être gravée. Aussi selon la direction 4, aucune zone 5a-d ne recouvre, ni n'est recouverte par même une partie d'une autre zone 5a-d, que cette zone 5a-d soit relativement plus ou moins profonde.

Selon un mode de réalisation avantageux, les extensions/contours de deux zones 5a-d peuvent cependant être contiguës. Ceci permet de graver un motif en continuité entre ces deux zones, ce qui rend encore plus difficile une modification cohérente dudit motif, nécessitant d'accéder à ces deux zones, pouvant être situées à des profondeurs 8a-c différentes. Dans le cas d'un motif gravé réparti sur plusieurs zones 5a-d, des zones 5a-d contiguës permettent la réalisation en continuité dudit motif réparti.

Selon un mode de réalisation, plus particulièrement illustré à la figure 5, une zone 5a-d apte à être gravée comprend une partie opaque 12 et une partie transparente 11. Au-dessus de ladite partie transparente 11, tout matériau doit être aussi transparent, jusqu'à la surface externe 6 du support, afin de laisser pénétrer le faisceau laser 13. La partie transparente 11 contient un matériau qui peut être carbonisé sous l'effet de l'énergie thermique apporté par le faisceau laser 13, tel du carbone. La partie opaque 12 est au moins opaque au faisceau laser 13 au moins au niveau de la surface d'interface avec la partie transparente 11. Le principe de la gravure par laser est que le faisceau laser 13 est stoppé par la surface de la partie opaque 12 et vient ainsi échauffer la partie transparente 11 située à proximité. Cet échauffement carbonise ledit matériau et produit un point 14, typiquement noir. Ce point 14 se forme initialement à proximité de la surface de la partie opaque 12 et remonte le long du faisceau laser 13. La hauteur du point 14 ainsi obtenue est fonction du temps d'application du faisceau laser 13 et détermine l'intensité de noir du point 14. Cette hauteur est comprise entre 20 (gris clair) et 300 (noir intense) microns.

Il est ainsi possible en variant la position du point 14 dans la surface d'interface entre la partie opaque 12 et la partie transparente 11 et la durée/intensité d'application du faisceau laser 13, de réaliser une écriture ou un dessin en niveau de gris, au moyen de points 14.

La profondeur 8a-c d'une zone 5a-d apte à être gravée est ainsi déterminée par la position en profondeur de la surface de séparation entre partie opaque 12 et partie transparente 11. Il est ainsi possible, selon un mode de réalisation plus particulièrement illustré à la figure 6, de réaliser un dispositif 1 selon l'invention en réalisant un support 2 en au moins deux parties, une partie opaque 12, ici en bas, et une partie transparente 11, ici en haut. Les différentes profondeurs 8a-c sont obtenues par exemple en réalisant des paliers échelonnés dans la surface d'interface. Un tel échelonnement peut être réalisé par toute méthode.

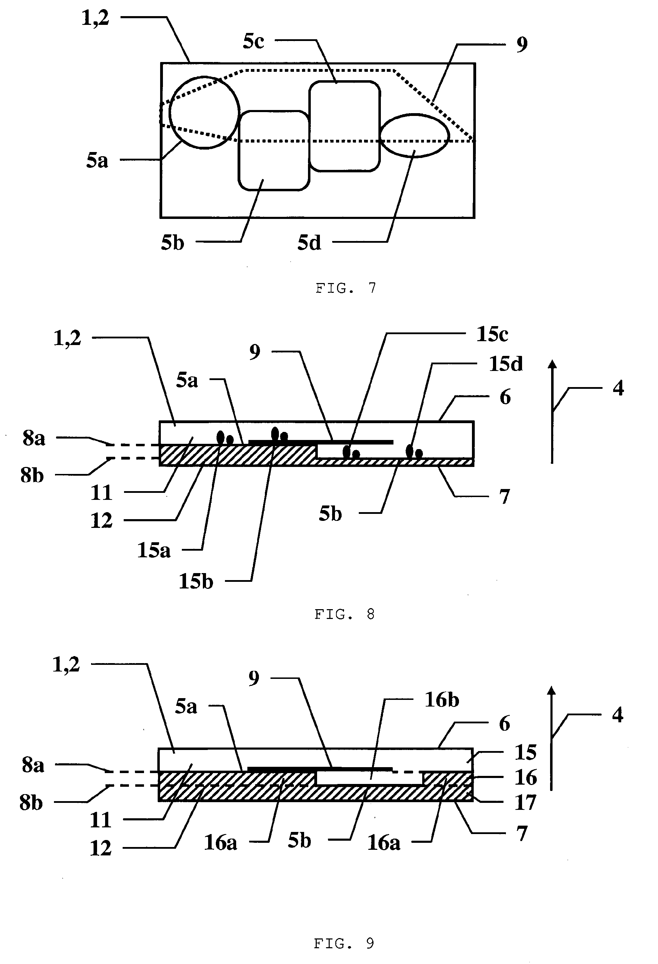

Le support 2 de la figure 7 présente ainsi des zones 5a-d sensiblement disposées aux mêmes positions que le mode de réalisation de la figure 4.

Il est encore possible d'intercaler au moins un film de sécurité 9. Selon un mode de réalisation avantageux, le film de sécurité 9 est intercalé en profondeur entre deux zones 5a-d. Aussi le film de sécurité 9 est disposé à une profondeur intermédiaire entre les deux profondeurs 8a-c desdites deux zones 5a-d.

Selon une caractéristique plus particulièrement visible à la figure 5, qui présente une vue de dessus du dispositif 1 de la figure 4 ou de la figure 6, le film de sécurité 9 présente une extension selon le plan 3 du dispositif 1. La forme de cette extension peut être quelconque. Cependant, avantageusement, afin de renforcer la protection anti-ponçage conférée par un dispositif de sécurité 1, cette extension est déterminée telle qu'elle s'étende, au moins partiellement en superposition avec l'extension dans le plan 3 d'au moins une zone 5a-d. Ainsi le film de sécurité 9 s'étend de telle manière à recouvrir au moins une partie d'une zone 5a-d, dans le cas d'une zone 5a-d disposée plus profondément dans le support 2 relativement au film de sécurité 9. Alternativement ou complémentairement, le film de sécurité 9 s'étend de telle manière à être recouvert par au moins une partie d'une autre zone 5a-d, dans le cas d'une zone 5a-d disposée moins profondément.

Ainsi un film de sécurité 9 se trouve intercalé en profondeur entre des zones 5a-d, avantageusement situées à des profondeurs 8a-c différentes. Ceci complique avantageusement l'accès aux zones 5a-d au moyen d'un ponçage plan.

Selon un mode de réalisation, le ou les films de sécurité 9 est (sont) transparent(s). Ceci permet avantageusement de laisser passer un faisceau laser 13 au travers d'un film de sécurité 9 et ainsi de réaliser une gravure d'un motif dans une zone 5a-d située sous un film de sécurité 9. Avantageusement encore cette propriété de transparence permet qu'un motif gravé dans une telle zone 5a-d située sous un film de sécurité 9, reste visible.

Selon un mode de réalisation, un film de sécurité 9 comprend un dispositif optique variable. Un tel dispositif optique variable, « Optical Variable Device » en anglais, ou OVD, est une catégorie de films connue de l'homme du métier comprenant des microstructures diffractant la lumière. La présence d'un tel film OVD dans un dispositif de sécurité 1 est ainsi détectable visuellement.

Dans le cas où un tel film OVD est disposé, en tout ou partie, au-dessus d'une zone 5a-d, il est clairement visible.

Dans le cas où un tel film OVD est disposé sous une zone 5a-d, il reste partiellement visible, du moins suffisamment pour que sa présence puisse être visuellement contrôlée, du fait de la faible densité d'un motif gravé, laissant suffisamment d'espace entre les points 14.

Un tel OVD est encore avantageux en ce qu'il présente une épaisseur très faible, typiquement comprise entre 5 et 25 microns, négligeable par rapport aux épaisseurs des autres couches, typiques de l'ordre de quelques dizaines ou quelques centaines de microns. Ceci facilite son intégration par insertion entre des couches avant laminage.

Un exemple d'un tel OVD qui de plus est transparent est un hologramme transparent.

Les formes des zones 5a-d et des parties 11, 12, mises en oeuvre dans un dispositif de sécurité 1 selon l'invention peuvent être quelconques. Cependant, afin notamment de simplifier le procédé de fabrication, ces zones 5a-d et parties 11, 12, sont avantageusement conformées en couches planes. Ces couches sont avantageusement parallèles au plan 3 du dispositif 1. Ceci permet par exemple une réalisation par empilage de ces différentes couches et laminage.

De même un film de sécurité 9 est avantageusement conformé en une couche plane. Un tel film de sécurité 9 est typiquement réalisé à part et inséré entre deux couches avant de réaliser une opération d'assemblage par laminage.

Tous les constituants d'un tel dispositif de sécurité 1 sont en matériaux plastiques. Tous les matériaux plastiques classiquement utilisés dans la fabrication de carte plastique sont candidats.

Le polycarbonate est un matériau préférentiel en ce qu'il fusionne avec lui-même. Ainsi les différents composants, et par exemple, la partie transparente 11 et la partie opaque fusionnent lors d'un laminage pour ne former qu'un seul composant. Le dispositif de sécurité 1 ainsi réalisé est monobloc et ne peut pas être délaminé.

La figure 8 illustre différentes configurations de zones 5a-d aptes à être gravées, relativement à un film de sécurité 9. Le dispositif 1 illustré comprend un côté extérieur 6, ici dirigé vers le haut et un côté intérieur 7, ici dirigé vers le bas. Le dispositif 1 comprend une partie transparente 11 et une partie opaque 12. La partie transparente 11 est transparente depuis l'interface avec la partie opaque 12 jusqu'à la surface du côté extérieur 6. La partie transparente 11 est chargée en matériau apte à être carbonisé par un faisceau laser 13. La partie opaque 12 est étagée selon deux hauteurs, définissant deux profondeurs 8a, 8b et ainsi deux zones 5a, 5b aptes à être gravées.

Quatre configurations 15a-d sont représentées, figurées chacune par deux points de gravure illustratifs. La première configuration 15a correspond à une première zone 5a dans une partie où un film de sécurité 9 est absent. Cette zone est gravée comme dans l'art antérieur. Le faisceau laser 13 et stoppé par la surface de la partie opaque 12 et carbonise la partie transparente 11.

Une autre configuration 15d correspond à une autre zone 5b dans une partie où un film de sécurité 9 est absent. Cette zone est gravée comme dans l'art antérieur. Elle se différencie de la configuration 15a de par sa profondeur 8b différente de la profondeur 8a de la configuration 15a.

Une autre configuration 15b correspond à la zone 5a dans une partie où un film de sécurité 9 est présent. Ledit film de sécurité 9 est disposé à l'interface entre la partie transparente 11 et la partie opaque 12. Dans cette situation, le film de sécurité 9 est considéré, au regard des descriptions précédentes, être en dessous de la zone 5a. Le faisceau laser 13 provenant du côté extérieur 6, traverse la partie transparente 11. Il traverse ensuite en sens aller le film de sécurité 9 transparent qui ne l'affecte pas. Il est ensuite stoppé par la surface de la partie opaque 12 et provoque un échauffement local. Cet échauffement local n'affecte sensiblement pas le film de sécurité 9. Le film de sécurité 9 n'est pas chargé en matériau carboné et n'est donc pas apte à être gravé. De plus l'épaisseur du film de sécurité 9 est le plus souvent négligeable devant la hauteur d'un point 14. Il s'ensuit qu'un point gravé 14 se forme au dessus du film de sécurité 9, dans la partie transparente 11 qui est, elle, apte à être gravée.

Une autre configuration 15c correspond à la zone 5b dans une partie où un film de sécurité 9 est présent. Ledit film de sécurité 9 est disposé dans la partie transparente 11, nettement au-dessus de l'interface entre la partie transparente 11 et la partie opaque 12, laissant ainsi une épaisseur de partie transparente 11 entre le film de sécurité 9 et la partie opaque 12. Dans cette situation, le film de sécurité 9 est considéré, au regard des descriptions précédentes, être au-dessus de la zone 5b. Le faisceau laser 13 provenant du côté extérieur 6, traverse toute la partie transparente 11 y compris le film de sécurité 9 transparent qui ne l'affecte pas. Il est ensuite stoppé par la surface de la partie opaque 12 et provoque un échauffement local. Il s'ensuit qu'un point gravé 14 se forme en dessous du film de sécurité 9, entre la partie opaque 12 et le film de sécurité 9, dans la partie transparente 11 correspondante, apte à être gravée.

Cette représentation de la figure 8 est illustrative et il est possible d'avoir plus de zones 5a-b, réparties sur plus de profondeurs 8a-b, et d'intercaler entre ces zones plusieurs films de sécurité 9, à différentes profondeurs 8a-b. La multiplication des profondeurs 8a-b, des zones 5a-b, des films de sécurité 9 augmente à proportion la difficulté à réaliser un accès aux motifs par ponçage.

L'invention peut être appliquée à la sécurisation d'un document identitaire. Un dispositif de sécurité 1 selon l'invention peut être apposé/collé sur un document identitaire sous forme papier. Dans le cas d'un document identitaire réalisé dans une carte plastique mince, un dispositif de sécurité 1 selon l'invention peut être directement réalisé de matière dans le corps de ladite carte plastique mince.

L'invention concerne encore un procédé de fabrication d'un dispositif de sécurité 1. Ce procédé est illustré à la figure 9, qui reprend un dispositif de sécurité 1 selon une conformation assez proche du mode de réalisation de la figure 8. Ce procédé de fabrication comprend différentes étapes. Le dispositif de sécurité 1 est obtenu à partir de couches minces de matériau, sensiblement planes. Selon une première étape il est réalisé une couche mixte 16, comprenant une ou plusieurs parties opaques 16a et une ou plusieurs parties transparentes 16b. Lesdites parties transparentes 16b traversent ladite couche mixte 16 sur toute son épaisseur.

Au cours d'une deuxième étape, il est réalisé un empilage comprenant dans l'ordre, représenté à la figure 9 de haut en bas, une couche transparente 15, au moins un film de sécurité 9, la couche mixte 16 précédemment réalisée et une couche opaque 17. Les différentes couches 15-17 présentent avantageusement des extensions dans le plan 3 sensiblement identiques. Ledit au moins un film de sécurité 9 peut présenter une extension identique, ou peut présenter, tel qu'illustré, une extension plus réduite. Cependant l'extension du film de sécurité 9 est telle qu'il recouvre, au moins partiellement, ladite au moins une partie transparente 16b de la couche mixte 16.

Au cours d'une troisième étape cet empilage est laminé en appliquant les conditions de pression et de température adaptées.

Il est ainsi formé au moins deux zones 5a et 5b aptes à être gravées. La zone 5a est disposée à une première profondeur 8a et est formée par l'interface entre la face supérieure de la couche mixte 16 dans une partie opaque 16a et la couche transparente 15. Cette zone 5a peut être partiellement couverte par un film de sécurité 9. Cette zone 5a est apte à recevoir un motif gravé à une première profondeur 8a. Dans la partie où un film de sécurité 9 est présent, le motif gravé est situé au-dessus dudit film de sécurité 9.

La zone 5b est disposée à une deuxième profondeur 8b et est formée par l'interface entre la face supérieure de la couche opaque 17 et la couche mixte 16 dans une partie transparente 16b. Cette zone 5b est, au moins partiellement, couverte par un film de sécurité 9. Cette zone 5b est apte à recevoir un motif gravé à une deuxième profondeur 8b. Dans la partie où un film de sécurité 9 est présent, le motif gravé est situé au-dessous dudit film de sécurité 9.Selon un mode de réalisation avantageux, la réalisation de la couche mixte 16, comprenant au moins une partie opaque 16a et au moins une partie transparente 16b peut être effectuée selon les étapes suivantes.

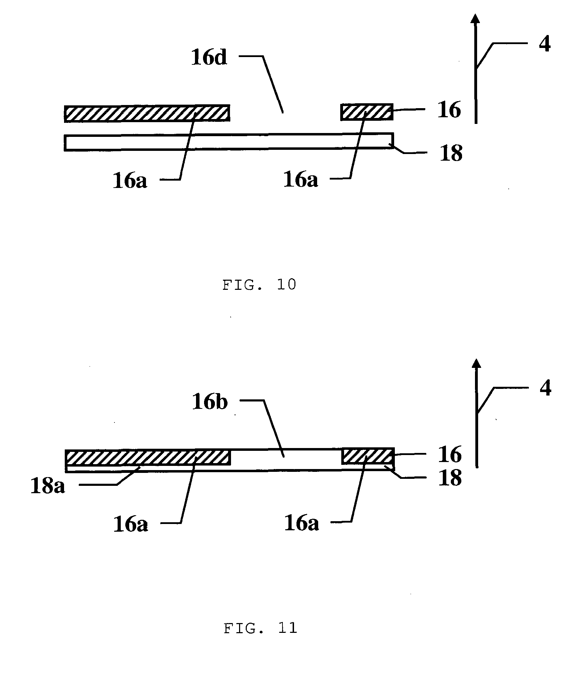

Tel qu'illustré à la figure 10, en partant d'une couche initialement opaque continue 16, il est pratiqué au moins une découpe débouchante 16d correspondant à chaque partie devant à terme être une partie transparente 16b. Cette couche opaque ainsi découpée 16 est ensuite empilée avec une couche transparente 18. Cet empilage de deux couches 16, 18 est ensuite laminé. Ce laminage est réalisé en appliquant les conditions de pression et de température adaptées. Durant cette étage de laminage, la couche transparente 18 vient fondre de manière à venir remplir l'espace libre laissé par ladite au moins une découpe 16d de manière à former ladite au moins une partie transparente 16b de la couche mixte 16. Le résultat obtenu est illustré à la figure 11.

La fusion de la couche transparente 18 est particulièrement aisée à obtenir avec une couche transparente 18 en polycarbonate.

Il se peut que la couche transparente 18 disparaisse totalement en épaisseur pour former et remplir ladite au moins une partie transparente 16b. Il est alors obtenu, une couche mixte 16 telle qu'illustrée à la figure 9.

Alternativement, il se peut qu'il persiste en épaisseur une partie 18a de la couche transparente 18 telle qu'illustrée à la figure 11. Une telle couche mixte 16 peut alors être intégrée de la même manière selon un empilage identique à celui de la figure 9. Il persiste alors une épaisseur de matériau transparent 18a, disposée à la profondeur 8b, qui ne modifie en rien la création des zones 5a-b aptes à être gravées et leur disposition relativement au dit au moins un film de sécurité 9.

## Revendications

1. Dispositif de sécurité (1) présentant une extension principale sensiblement selon un plan (3) et comprenant au moins deux zones (5a-d) aptes à être gravées par laser, chacune desdites au moins deux zones (5a-d) comprenant une partie transparente (11) et une partie opaque (12) et les interfaces entre la partie transparente (11) et la partie opaque (12) d'au moins deux de ces zones étant disposées à au moins deux profondeurs (8a-c) différentes, lesdites au moins deux zones étant ainsi disposées à au moins deux profondeurs différentes d'une manière telle que, selon une direction perpendiculaire au plan (3) du dispositif, aucune zone ne recouvre ni n'est recouverte par même une partie d'une autre zone.

2. Dispositif selon la revendication 1, comprenant un motif gravé réparti entre les au moins deux zones (5a-d).

3. Dispositif selon la revendication 1 ou la revendication 2, où lesdites au moins deux zones (5a-d) présentent, dans le plan (3) du dispositif (1), des extensions disjointes.

4. Dispositif selon l'une quelconque des revendications 1 à 3, où au moins deux zones (5a-d) présentent, dans le plan (3) du dispositif (1), des extensions contiguës.

5. Dispositif selon l'une quelconque des revendications 1 à 4, où les zones (5a-d) et parties (11, 12) sont conformées en couches planes parallèles au plan (3) du dispositif (1).

6. Dispositif selon l'une quelconque des revendications 1 à 5, comprenant encore au moins un film de sécurité (9) intercalé entre deux desdites au moins deux zones (5a-d).

7. Dispositif selon la revendication 6, où ledit au moins un film de sécurité (9) est disposé à une profondeur intermédiaire entre lesdites deux profondeurs (8a-c).

8. Dispositif selon la revendication 6 ou la revendication 7, où le film de sécurité (9) présente une extension selon le plan (3) du dispositif (1) telle qu'il recouvre au moins une partie d'une zone (5a-d) et/ou est recouvert par au moins une partie d'une autre zone (5a-d).

9. Dispositif selon l'une quelconque des revendications 6 à 8, où le film de sécurité (9) est transparent.

10. Dispositif selon la revendication 9, où le film de sécurité (9) comprend un dispositif optique variable.

11. Dispositif selon la revendication 10, où le dispositif optique variable comprend un hologramme transparent.

12. Dispositif selon l'une quelconque des revendications 6 à 11, où le film de sécurité (9) est conformé en une couche plane parallèle au plan (3) du dispositif (1).

13. Dispositif selon l'une quelconque des revendications 1 à 12, comprenant un motif gravé, au moins une partie dudit motif étant gravé dans une zone (5a-d) disposée d'un côté d'un film de sécurité (9) et au moins une partie dudit motif étant gravé dans une autre zone (5a-d) disposée de l'autre côté du film de sécurité (9).

14. Document identitaire comprenant au moins un dispositif de sécurité (1) selon l'une quelconque des revendications précédentes.

15. Procédé de fabrication d'un dispositif de sécurité (1) comprenant les étapes suivantes :
- réalisation d'une couche mixte (16) : opaque sur au moins une partie (16a) de son extension et transparente sur au moins une autre partie (16b) de son extension,
- empilage dans l'ordre suivant de : une couche transparente (15), au moins un film de sécurité (9), ladite couche mixte (16) et une couche opaque (17), ledit film de sécurité (9) se superposant au moins partiellement avec ladite partie transparente (16b) de la couche mixte (16), et
- laminage dudit empilage.

16. Procédé selon la revendication 15, où la réalisation de la couche mixte (16) comprend les étapes de :
- découpe débouchante (16d) dans une couche opaque (16) de ladite au moins une partie (16b) devant être transparente,
- empilage de ladite couche découpée (16) et d'une couche transparente (18), et
- laminage dudit empilage.

## Patentansprüche

1. Sicherheitsvorrichtung (1), die eine Hauptausdehnung im Wesentlichen gemäß einer Ebene (3) aufweist und mindestens zwei Zonen (5a-d) enthält, die lasergraviert werden können, wobei jede der mindestens zwei Zonen (5a-d) einen durchsichtigen Teil (11) und einen undurchsichtigen Teil (12) enthält und die Schnittlinien zwischen dem durchsichtigen Teil (11) und dem undurchsichtigen Teil (12) von mindestens zwei dieser Zonen in mindestens zwei unterschiedlichen Tiefen (8a-c) angeordnet sind, wobei die mindestens zwei Zonen so in mindestens zwei unterschiedlichen Tiefen derart angeordnet sind, dass gemäß einer Richtung lotrecht zur Ebene (3) der Vorrichtung keine Zone auch nur einen Teil einer anderen Zone bedeckt oder von ihm bedeckt wird.

2. Vorrichtung nach Anspruch 1, die ein graviertes Muster enthält, das zwischen den mindestens zwei Zonen (5a-d) verteilt ist.

3. Vorrichtung nach Anspruch 1 oder Anspruch 2, wobei die mindestens zwei Zonen (5a-d) in der Ebene (3) der Vorrichtung (1) getrennte Ausdehnungen aufweisen.

4. Vorrichtung nach einem der Ansprüche 1 bis 3, wobei mindestens zwei Zonen (5a-d) in der Ebene (3) der Vorrichtung (1) aneinandergrenzende Ausdehnungen aufweisen.

5. Vorrichtung nach einem der Ansprüche 1 bis 4, wobei die Zonen (5a-d) und Teile (11, 12) in ebenen Schichten parallel zur Ebene (3) der Vorrichtung (1) ausgebildet sind.

6. Vorrichtung nach einem der Ansprüche 1 bis 5, die außerdem mindestens eine Sicherheitsfolie (9) enthält, die zwischen zwei der mindestens zwei Zonen (5a-d) eingefügt ist.

7. Vorrichtung nach Anspruch 6, wobei die mindestens eine Sicherheitsfolie (9) in einer Zwischentiefe zwischen den zwei Tiefen (8a-c) angeordnet ist.

8. Vorrichtung nach Anspruch 6 oder Anspruch 7, wobei die Sicherheitsfolie (9) eine Ausdehnung gemäß der Ebene (3) der Vorrichtung (1) aufweist, derart, dass sie mindestens einen Teil einer Zone (5a-d) bedeckt und/oder von mindestens einem Teil einer anderen Zone (5a-d) bedeckt wird.

9. Vorrichtung nach einem der Ansprüche 6 bis 8, wobei die Sicherheitsfolie (9) durchsichtig ist.

10. Vorrichtung nach Anspruch 9, wobei die Sicherheitsfolie (9) eine variable optische Vorrichtung enthält.

11. Vorrichtung nach Anspruch 10, wobei die variable optische Vorrichtung ein durchsichtiges Hologramm enthält.

12. Vorrichtung nach einem der Ansprüche 6 bis 11, wobei die Sicherheitsfolie (9) als eine ebene Schicht parallel zur Ebene (3) der Vorrichtung (1) ausgebildet ist.

13. Vorrichtung nach einem der Ansprüche 1 bis 12, die ein graviertes Muster enthält, wobei mindestens ein Teil des Musters in einer Zone (5a-d) graviert ist, die auf einer Seite einer Sicherheitsfolie (9) angeordnet ist, und mindestens ein Teil des Musters in einer anderen Zone (5a-d) graviert ist, die auf der anderen Seite der Sicherheitsfolie (9) angeordnet ist.

14. Identitätsdokument, das mindestens eine Sicherheitsvorrichtung (1) nach einem der vorhergehenden Ansprüche enthält.

15. Verfahren zur Herstellung einer Sicherheitsvorrichtung (1), das die folgenden Schritte enthält:
- Herstellung einer gemischten Schicht (16): undurchsichtig in mindestens einem Teil (16a) ihrer Ausdehnung und durchsichtig in mindestens einem anderen Teil (16b) ihrer Ausdehnung,
- Stapelung in der folgenden Reihenfolge: eine durchsichtige Schicht (15), mindestens eine Sicherheitsfolie (9), die gemischte Schicht (16) und eine undurchsichtige Schicht (17), wobei die Sicherheitsfolie (9) den durchsichtigen Teil (16b) der gemischten Schicht (16) zumindest teilweise überdeckt, und
- Walzen des Stapels.

16. Verfahren nach Anspruch 15, wobei die Herstellung der gemischten Schicht (16) die Schritte enthält:
- durchgehender Ausschnitt (16d) in einer undurchsichtigen Schicht (16) des mindestens einen Teils (16b), der durchsichtig sein soll,
- Stapeln der ausgeschnittenen Schicht (16) und einer durchsichtigen Schicht (18), und
- Walzen des Stapels.

## Claims

1. Safety device (1) exhibiting a main expanse substantially in a plane (3) and comprising at least two zones (5a-d) able to be engraved by laser, each of the said at least two zones (5a-d) comprising a transparent part (11) and an opaque part (12) and the interfaces between the transparent part (11) and the opaque part (12) of at least two of these zones being disposed at at least two different depths (8a-c), the said at least two zones thus being disposed at at least two different depths in such a way that, in a direction perpendicular to the plane (3) of the device, no zone covers or is covered by even a part of another zone.

2. Device according to Claim 1, comprising an engraved pattern distributed between the at least two zones (5a-d).

3. Device according to Claim 1 or Claim 2, where the said at least two zones (5a-d) exhibit, in the plane (3) of the device (1), disjoint expanses.

4. Device according to any one of Claims 1 to 3, where at least two zones (5a-d) exhibit, in the plane (3) of the device (1), contiguous expanses.

5. Device according to any one of Claims 1 to 4, where the zones (5a-d) and parts (11, 12) are made as plane layers parallel to the plane (3) of the device (1).

6. Device according to any one of Claims 1 to 5, further comprising at least one safety film (9) inserted between two of the said at least two zones (5a-d) .

7. Device according to Claim 6, where the said at least one safety film (9) is disposed at an intermediate depth between the said two depths (8a-c).

8. Device according to Claim 6 or Claim 7, where the safety film (9) exhibits an expanse in the plane (3) of the device (1) such that it covers at least one part of a zone (5a-d) and/or is covered by at least one part of another zone (5a-d).

9. Device according to any one of Claims 6 to 8, where the safety film (9) is transparent.

10. Device according to Claim 9, where the safety film (9) comprises a variable optical device.

11. Device according to Claim 10, where the variable optical device comprises a transparent hologram.

12. Device according to any one of Claims 6 to 11, where the safety film (9) is made as a plane layer parallel to the plane (3) of the device (1).

13. Device according to any one of Claims 1 to 12, comprising an engraved pattern, at least one part of the said pattern being engraved in a zone (5a-d) disposed on one side of a safety film (9) and at least one part of the said pattern being engraved in another zone (5a-d) disposed on the other side of the safety film (9).

14. Identity document comprising at least one safety device (1) according to any one of the preceding claims.

15. Method for manufacturing a safety device (1) comprising the following steps:
- production of a mixed layer (16): opaque over at least one part (16a) of its expanse and transparent over at least one other part (16b) of its expanse,
- stacking in the following order of: a transparent layer (15), at least one safety film (9), the said mixed layer (16) and an opaque layer (17), the said safety film (9) being overlaid at least partially with the said transparent part (16b) of the mixed layer (16), and
- laminating of the said stacking.

16. Method according to Claim 15, where the production of the mixed layer (16) comprises the steps of:
- cutting out (16d) from an opaque layer (16) of the said at least one part (16b) required to be transparent,
- stacking of the said cut layer (16) and of a transparent layer (18), and
- laminating of the said stacking.
